# EUROPEAN PATENT APPLICATION

(11) **EP 3 299 338 A1**
(43) Date of publication of application: **28.03.2018**
(21) Application number: 16795939.4
(22) Date of filing: 18.05.2016
(51) Int. Cl.: C01B 31/04, B82Y 30/00, C25B 11/00

(54) **GRAPHENE-BASED ELECTROACTIVE NANOFLUIDS AS LIQUID ELECTRODES IN FLOW CELLS**

(30) Priority: 20.05.2015 ES 201530693
(71) Applicant: Consejo Superior de Investigaciones Cientificas (CSIC), 28006 Madrid (ES); Fundació Institut Català de Nanociència i Nanotecnologia, 08193 Bellaterra (ES)
(72) Inventor: GÓMEZ ROMERO, Pedro, 08193 Bellaterra (Barcelona) (ES); DUBAL, Deepak, 08193 Bellaterra (Barcelona) (ES); GÓMEZ CASAÑ, Daniel, 08193 Bellaterra (Barcelona) (ES)
(74) Representative: Pons Ariño, Angel
(86) International application number: PCT/ES2016/070371
(87) International publication number: WO 2016/185071

(57) **Abstract**

The invention relates to VERY stable electroactive nanofluids comprising graphene-based compounds, and the production methods thereof. The invention also relates to the use of said electroactive nanofluids as liquid electrodes for the storage of energy in flow cells.

## Description

The invention relates to highly stable electroactive nanofluids comprising graphene-based compounds. Furthermore the present invention relates to the use of said electroactive nanofluids as liquid electrodes for energy storage in flow cells.

### STATE OF THE ART

Energy storage is in the midst of a revolutionary change which will turn it into a key factor within the upcoming sustainable energy model. As a matter of fact, Electrochemical Energy Storage (ECES) has already come a long way from the heavy and contaminating lead-acid battery, introduced by Planté in 1859, to the last generation of rechargeable Lithium-ion batteries, ruling now the Kingdom of consumer electronics, and the new generation of supercapacitors. But when it comes to high-power storage applications Pumped Hydro, and to a lesser extent compressed air, is presently the only technology with a capacity high enough to respond to our oversized collective needs of power.

Among ECES systems, redox flow batteries are considered the strongest technology to tackle higher-power applications at a low cost. This is not to say that they could compete at the GW level but their feasible design in the kW-MW range could make of them strong players for distributed and smart grid applications.[Dunn, B. Kamath, H. Tarascon, J. M. Electrical Energy Storage for the Grid: A Battery of Choices. Science, 334, 928-935 (2011)]. In flow electrochemical cells energy and power are decoupled by storing electroactive compounds externally to the electrochemical cell. However, the limited solubility of the electroactive species used in conventional flow battery solutions, for example 1-2 M Vanadium salts in all-vanadium flow batteries, limits in turn their energy density. Furthermore, increasing energy density while keeping low cost, could make of flow cells practical systems not only to store intermittent renewable energy but also to feed Electric Vehicles (EVs).[Leung, P. et al. Progress in redox flow batteries, remaining challenges and their applications in energy storage. RSC Adv., 2, 10125-10156 (2012)]

It should be noted that a few relevant publications can be found in the literature in which slurries have been used as electrodes for energy storage. For instance, Gogotsi et al. [Presser, V. et al. The electrochemical flow capacitor: A new concept for rapid energy storage and recovery. Adv. Energy Mater. 2, 895-902 (2012)] reported an electrochemical flow capacitor (EFC) using a flowable carbon slurry improving upon the concept introduced by Kastening et al. [Kastening, B. Boinowitz, T. Heins, M. Design of a slurry electrode reactor system. J. Appl. Electrochem. 27, 147-152 (1997)]. However, slurry electrodes are not practical for application in flow cells due precisely to their poor flowing properties. Indeed, suspensions of microparticles have been tried in numerous applications (including HTFs) but are not up to the task when it comes to the final engineering, due to precipitation and/or clogging.REF: Saidur, R., et al. (2011). "A review on applications and challenges of nanofluids." Renewable & Sustainable Energy Reviews 15(3): 1646-1668..

### DESCRIPTION OF THE INVENTION

The present invention discloses Electroactive Nanofluids (ENFs), concretely highly stable graphene based electroactive nanofluids, which can be used as liquid electrodes for energy storage in flow cells.

In the present invention the term "nanofluid" describes a homogeneous dispersion of at least a nanomaterial with at least one dimension in a scale ranging from 10⁰ to 10² nm, in a conventional base fluid. In the present invention said nanomaterial refers to graphene based compounds or composites (GCs).

An electro-active material is a material, particulate or liquid, solid or molecular, able to accept electrons and thus store electrical energy through redox faradaic mechanisms and-or through capacitive, double-layer mechanisms and-or through pseudocapacitive mechanisms. Therefore, the term "electroactive nanofluid (ENF)" as used herein refers to a nanofluid which comprises any electroactive material. In the ENF of the present invention the graphene based compounds or composites is the nanomaterial and further acts as electro-active material.

The ENFs of the present invention can be used as "flowing electrodes" in flow cells since they behave as true bulk liquid electrodes. These graphene-based ENFs effectively behave as true liquid electrodes with very fast storage mechanism and herald the application of ENFs in general for energy storage in a new generation of flow cells.

The use of the ENFs of the invention as electrodes in flow cells constitutes a groundbreaking concept of electrical energy storage system which will draw much attention for grid-level applications due to a very attractive combination of electrochemical properties such as high capacities coupled with high rate performance and long cycle life.

The graphene-based electroactive nanofluid electrodes of the present invention have reached specific capacitance values of about 170 F/g(C) with high specific energy of 13.1 Wh/kg(C) at a specific power of 450 W/kg(C) and excellent coulombic efficiency of 97.6 % after 1500 cycles.

Inventors of the present invention were able to scan electrodes comprising the ENF mentioned above in cyclic voltammograms as fast as with scan rate of 10-20 V/s.

A first aspect of the present invention relates to an electroactive nanofluid ((herein "nanofluid of the invention") characterized in that it comprises a) a liquid medium selected from an organic solvent or a water solution of acidic, neutral or basic compounds and said liquid medium optionally comprising a surfactant, and b) a graphene-based compound or composite, homogenously dispersed in the liquid medium, and said graphene-based compound or composite optionally comprising an electroactive material associated to the graphene based compounds.

The term "liquid medium" or "base fluid" refers herein to a dielectric liquid medium used as conventional liquid medium to form an electroactive nanofluid. Examples of liquid medium in the present invention are organic solvents such as acetonitrile, dimethylformamide and dimethylacetamide or water solutions of acidic, i.e. H₂SO₄, neutral, i.e. Na₂SO₄, or basic, i.e. KOH, compounds.

If needed, said liquid medium further comprises a surfactant. The term "surfactant" refers herein to any compound known by a person skilled in the art which can lower the surface tension (or interfacial tension) between two liquids or between a liquid and a solid. Examples of surfactant in the present invention are either ionic surfactants such as sodium dodecylsulphonate and MORWET D42™, or non-ionic surfactants such as triton X-100™. Preferably, the surfactant is in a weight percent between 0.01 and 5% based on the total weight of the liquid medium.

The term "graphene-based compound or composite" refers herein to graphene, graphene oxide, reduced graphene oxide or a combination thereof forming either compounds or composites with any other molecule, polymer or solid phase in extended or nanoparticulate form.

In another preferred embodiment of the present invention, the graphene based compound of the nanofluid of the invention is in a weight percent between 0.01 % and 10 % based on the total weight of the electroactive nanofluid.

Electroactive nanofluids were prepared by direct mixing of the graphene-based compound or composite and the liquid medium.

The graphene-based compound or composite optionally comprises electroactive substances either attached to the graphene based compounds or forming a mixture by dispersion in the base fluid. electro-active substances are those known for a person skilled in the art.

For example, polyoxometalates clusters can be anchored onto the surface of the graphene based compounds. Therefore, a further embodiment of the present invention relates to the graphene-based compound comprising polyoxometalates clusters which are in a weight percent between 0.01 % and 10% based on the total weight of the electroactive nanofluid. In another preferred embodiment of the present invention, the polyoxometalates clusters of the nanofluid of the invention are selected from the list consisting of phosphotungstate and phosphomolybdate.

Examples of organic electroactive compounds are quinones such as benzoquinone, naphtoquinone, anthraquinone and their derivatives.

Examples of solid electroactive phases are hexacyanoferrates i.e. KCu[Fe(CN)6], Fe₂[Fe(CN)₆], oxides i.e. MnO₂, NaₓMnO₂, LiMn₂O₄, Li(NiMnCo)O₂, TiO₂, Li₄Ti₅O₁₂ and phosphates i.e. LiFePO₄, LiMnPO₄, Li₃V₂(PO₄)₃.

Examples of electroactive polymers are polypyrrole, polyaniline, PEDOT, polyvynilcarbazole and their derivatives.

Another preferred embodiment of the present invention, relates to the eletroactive nanofluid of the invention further comprising carbon materials such as Activated Carbons (ACs) or Carbon Nanotubes (CNTs) aside from graphene. Each of these present specific advantages such as low cost (ACs) or anisotropy (CNTs) which expand the possible applications of the nanofluids of the invention.

Another aspect of the invention refers to the use of the nanofluid of the invention as electrode of a flow electrochemical cell, For example, a flow electrochemical cell comprising two compartments (positive and negative) with conducting current collectors in contact with the liquid electroactive nanofluids, both compartments separated by a membrane (cationic or anionic) or separator.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### BRIEF DESCRIPTION OF THE DRAWINGS

FIG. 1. Raman spectra of GO and rGO, respectively
FIG. 2 (a) XRD patterns of graphite, graphene oxide (GO) and reduced graphene oxide (rGO), (b) XPS spectrum of rGO, inset shows core-level C1s spectrum
FIG 3. (a, b) Scanning electron micrographs and (c, d) transmission electron micrographs of rGO at two different magnifications.
FIG. 4. (a, b) Nitrogen adsorption/desorption isotherm of rGO sample with corresponding BJH pore size distribution plot.
FIG. 5. Schematic diagram of the flow cell setup used in Example 3 in which charged and discharged ENFs are stored in separate containers. Two peristaltic pumps with automatic control of flow direction and flow rate were used. 1 Tanks 2 Pump 3 Separator 4 Cell.
FIG. 6 Cyclic voltammetry (CV) curves of rGO ENFs of different concentration at 20 mV/s scan rate in static condition.
FIG. 7 (a, b) CV curves of rGO electroactive nanofluid of 0.025 wt% concentration at different scanning rates starting from lowest scan rate 1 mV/s to highest scan rate 10,000 mV/s, respectively.
FIG. 8 Cyclic voltammetry (CV) curves of (a, b) 0.1 wt% rGO electroactive nanofluid and (c, d) 0.4 wt% rGO electroactive nanofluid at different scanning rates starting from lowest scan rate 1 mV/s (0.001 V/s) to 10,000 mV/s (10 V/s). Impressively, rGO electroactive nanofluid-based flowing electrode showed a rectangular shaped CV (typical of capacitive behavior) at the very high scan rate of 10 V/s confirming excellent power density of rGO electroactive nanofluid-based electrochemical flow capacitor (EFC). This is the highest scan rate used to measure CV curves for flow cells.
FIG. 9 Variation of specific capacitance with scan rate for rGO ENFs of different concentrations.
FIG. 10 (a) Nyquist plots for the rGO ENFs of different concentrations across the frequency range from 10 mHz to 10 kHz.
FIG. 11 Galvanostatic charge-discharge curves for rGO electroactive nanofluid of 0.025 wt% at different current densities in static condition.
FIG. 12 The power density versus energy density of rGO electroactive nanofluid in a Ragone plot.
FIG. 13 Variation of coulombic efficiency of rGO ENFs over 1500 charge and discharge cycles.
FIG. 14 Chronoamperometry for rGO electroactive nanofluid (0.025 wt%) at different applied voltages such as 0.2, 0.4, 0.6 and 0.8 V which shows high coulombic efficiency of 98.2 % when charged to a cell potential of 0.8 V and subsequently discharged to 0 V.
FIG. 15 Self-discharge i.e. shows the time-dependent loss of the open circuit cell potential for rGO ENFs (0.025 wt%).
FIG. 16 Cyclic voltammograms (20 mV/s) of 0.025 wt% rGO ENFs for different flow rates.
FIG. 17 Variation of specific capacitance of rGO ENFs with flow rates.
FIG. 18 Nyquist plots for the 0.025 wt% rGO electroactive nanofluid for different flow rates (frequency range 10 mHz to 10 kHz).
FIG. 19 Chronoamperometry for rGO electroactive nanofluid (0.025 wt%) during flow condition of 10 ml/min which shows high coulombic efficiency of 96.8 % when charged to a cell potential of 0.9 V and subsequently discharged to 0 V.
FIG. 20 (a, b, c) Scanning electron micrograph (SEM) and (d, e, f) scanning transmission electron micrographs of rGO, rGO-PMo12, rGO-PW12, respectively
FIG. 21 CV curves of a) rGO-PW12 and b) rGO-PMo12 electroactive nanofluids (0.025 wt %) electrode at different scanning rates (from 5 mV/s to the highest scan rate of 200 mV/s).
FIG. 22 Variation of specific capacitance rGO-PW12 and rGO-PMo12 electroactive nanofluids (0.025 wt %) electrode with scan rate
FIG. 23 Galvanostatic charge-discharge curves for 0.025 wt % of (a) rGO-PW12 and (b) rGO-PMo12 electroactive nanofluids at different current densities in static condition.
FIG. 24 The power density versus energy density of rGO-PW12 and rGO-PMo12 electroactive nanofluids (0.025 wt %) in a Ragone plot
FIG. 25 Chronoamperometry for (a) rGO-PW12 and (b) rGO-PMo12 electroactive nanofluids at different applied voltages such as 0.4, 0.6, 0.8 and 1.0 V which shows high coulombic efficiency of 95.2 % when charged to a cell potential of 1.0 V and subsequently discharged to 0 V.
FIG. 26 Galvanostatic charge/discharge cycling test for rGO-POM (rGO-PW12 and rGO-PMo12) electroactive nanofluids at different current densities from 4 A/g to 16 A/g for 200 cycles
FIG. 27 CV curves (at 100 mV/s scan rate) of 0.025 wt% rGO-POM electroactive nanofluid (a) rGO-PW12 and b) rGO-PMo12) for different flow rates.

### EXAMPLES

### Example 1: Synthesis of reduced graphene oxide (rGO).

Graphene oxide (GO) was synthesized from natural graphite using the modified Hummers method. Briefly, 5 g NaNO₃ and 225 ml H₂SO₄ were added to 5 g graphite and stirred for 30 min in an ice bath. 25 g KMnO₄ was added to the resulting solution, and then the solution was stirred at 50 °C for 2 h. 500 ml deionized water and 30 ml H₂O₂ (35%) were then slowly added to the solution, and the solution was washed with dilute HCl. Further, the GO product was washed again with 500 ml concentrated HCl (37%). The reduced graphene oxide (rGO) was prepared by high temperature treatment of the GO sample at 800 °C under nitrogen.

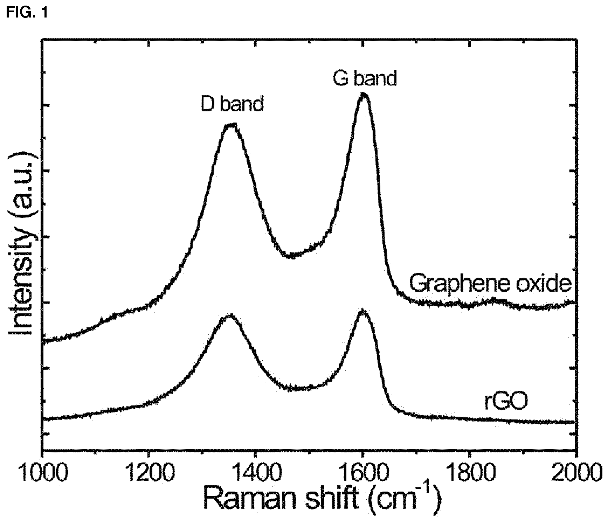

Results of Raman analysis are depicted in **FIG 1****).** The intensity ratio of the Raman D band (at 1348 cm⁻¹) and G band (at 1591 cm⁻¹) was D/G = 1.02, thereby confirming the formation of reduced graphene oxide.

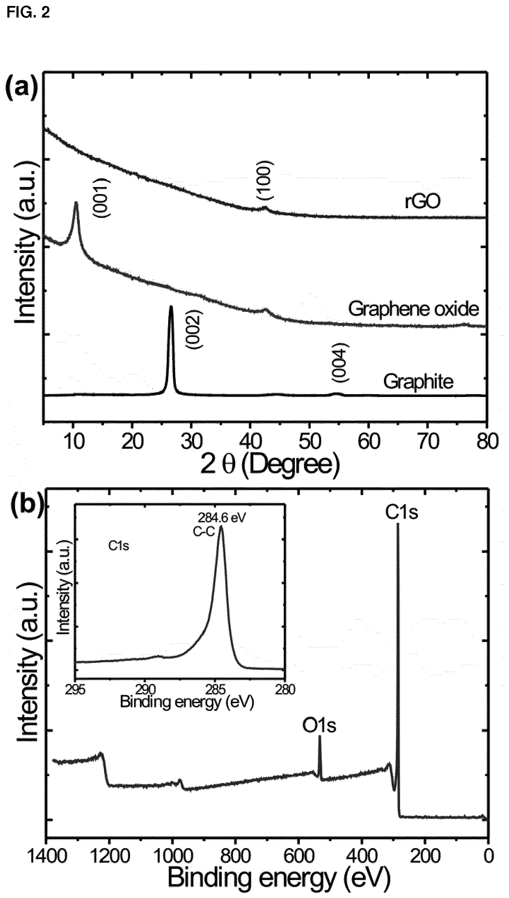

Crystallographic study was carried out using Panalytical X'pert Pro-MRD instrument (CuKalpha radiation and PIXel detector). X-ray photoelectron analyses were carried out by X-ray photoelectron spectroscopy (XPS, SPECS Germany, PHOIBOS 150). **FIG 2 a) and b)** refers to (a) XRD patterns of graphite, graphene oxide (GO) and reduced graphene oxide (rGO), (b) XPS spectrum of rGO, inset shows core-level C1s spectrum. The oxygen content in this rGO, as determined by XPS was 5.8%.

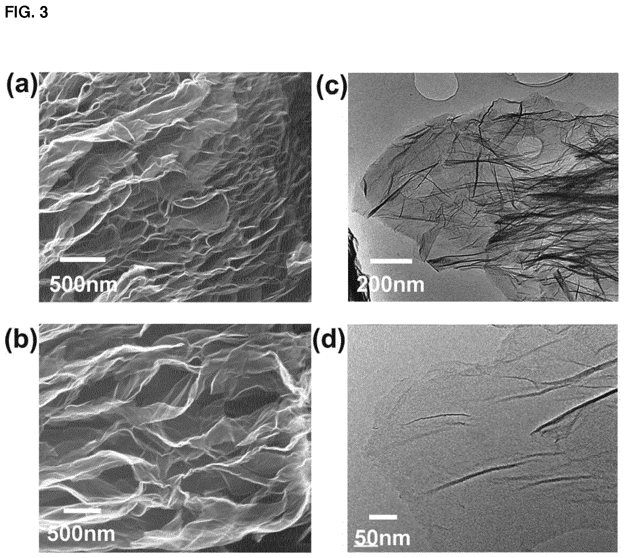

Surface morphological analysis of an rGO sample was carried out by scanning electron microscopy (FEI Quanta 650F Environmental SEM). TEM images were obtained with a field emission gun transmission electron microscope (Tecnai G2 F20 S-TWIN HR(S) TEM, FEI). See **FIG 3 a) - d)****.** HRTEM revealed that the rGO sheets are almost single layer with highly transparent aspect whereas FESEM and TEM images of a bulk sample showed layers completely spread out to form a highly porous layered structure.

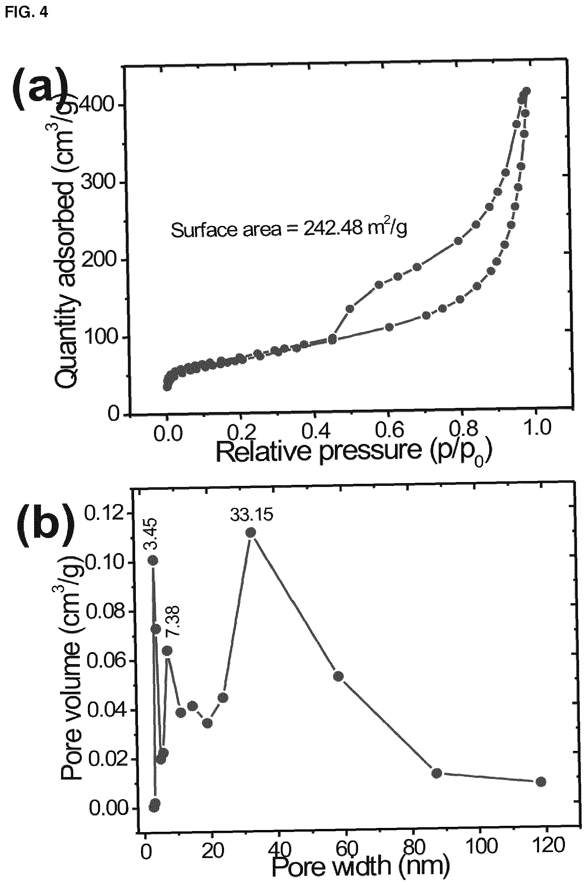

N₂ adsorption/desorption was determined by Brunauer-Emmett-Teller (BET) measurements using Micromeritics instrument (Data Master V4.00Q, Serial#:2000/2400). Results are shown in **FIG. 4****.** A distinct hysteresis loop observed is ascribed to the presence of a mesoporous structure in the interleaving nanosheets. In addition, rGO nanosheets exhibits pores in mesopores as well as macroporous region.

### Example 2: Synthesis of rGO electroactive nanofluid.

rGO Electroactive nanofluids were prepared by direct mixing of rGO in the liquid medium also called base fluid. In this analysis the base fluid was 1 M H₂SO₄ in distilled water. Electroactive nanofluids with different concentrations were prepared by mixing 0.025, 0.1 and 0.4 wt% of rGO in 1 M H₂SO₄ aqueous solution. In order to get stable suspension, 0.5 wt% of surfactant (triton X-100) was added and the mixture kept in an ultrasonic bath up to 2 h. The resulting sols were directly used as flowing electrodes in a home-made flow cell described in the text.

rGO electroactive nanofluids were prepared with different concentrations (0.025, 0.05, 0.1, 0.2 and 0.4 wt%) after different time intervals. The as-prepared rGO electroactive nanofluid looks dark black indicating stable and uniform dispersion of rGO in 1 M H₂SO₄ aqueous solution. rGO dispersions begun to precipitate after standing almost 10 hours and completely settled down after 40 hrs. Moreover, it is interesting to note that rGO electroactive nanofluids with low concentrations (0.025 and 0.05 wt%) remain stable for even longer time. Finally all rGO electroactive nanofluids could be easily redispersed by just mild shaking, looking again like the as-prepared products, and remaining stable for more than 5 hours, suggesting high stability of rGO electroactive nanofluids.

### Example 3: Flow cell design

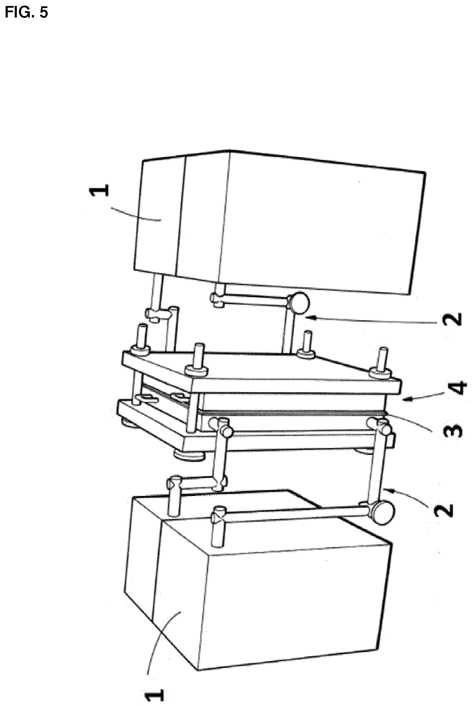

The electrochemical characterization of these rGO electroactive nanofluids of example 2 was carried out both under static and continuous flow conditions using a specially designed flow cell. See **FIG. 5****.** The cell body (7 cm × 6 cm × 1 cm) was made of two stainless-steel plates, acting as current collectors with a carved serpentine flow channel 5 mm wide and 5 mm deep. The cell compartments were separated by a polyvinylidene fluoride (PVDF) membrane (Durapore®; Merck Millipore, Germany) and oil paper was used as a gasket providing airtight sealing. The contact area between the ion-permeable membrane and the flow electrode was 12.7 cm². Finally, the cell was designed with the high level of flow control required for prototype testing in order to meet the expectations for a large-scale Effective Function Code (EFC) device. Thus, dual (back and forth) automated flow control of peristaltic pumps for each, positive and negative compartments was implemented.

### Example 4: Characterization of rGO electroactive nanofluid electrodes

The electrochemical performance of rGO electroactive nanofluids electrodes of different concentrations under static conditions was investigated by cyclic voltammetry (CV) using the flow cell design of example 3.

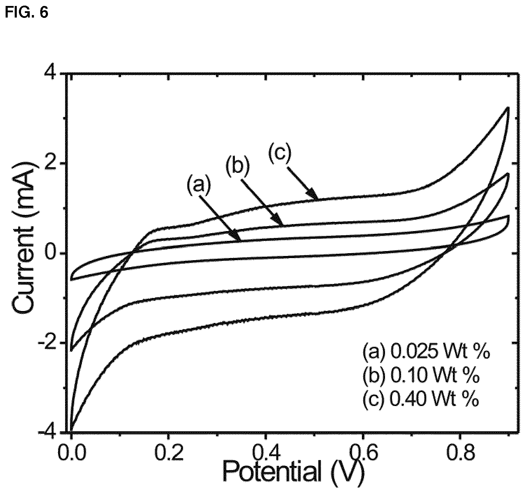

**FIG. 6** shows the CV curves of symmetric rGO electroactive nanofluid cells with different concentrations (from 0.025 wt % to 0.4 wt % rGO) at a scan rate of 20 mV/s. The currents under the curves increase and specific capacitances decrease as the concentration of electroactive nanofluids is increased, thus showing similar behavior to conventional supercapacitors with solid electrodes. The shape of CV curves is quasi-rectangular indicating a dominant capacitive mechanism of energy storage.

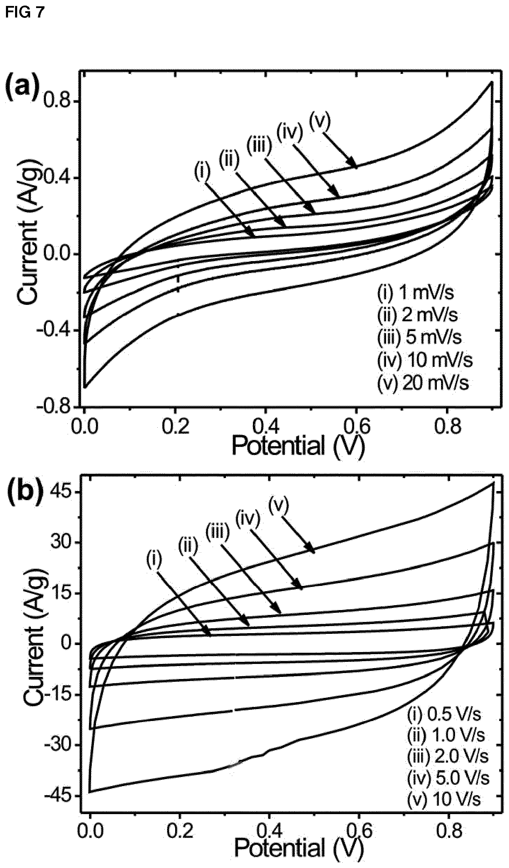

**FIG. 7** **(a, b)** shows the CV curves of rGO electroactive nanofluid (0.025 wt %) electrode at different scanning rates (from 1 mV/s to the highest scan rate of 10 V/s). The rectangular CV shape remains even at the very high scan rate of 10,000 mV/s; indicating that rGO electroactive nanofluids possess excellent rate capabilities, as needed for high-power supercapacitors.

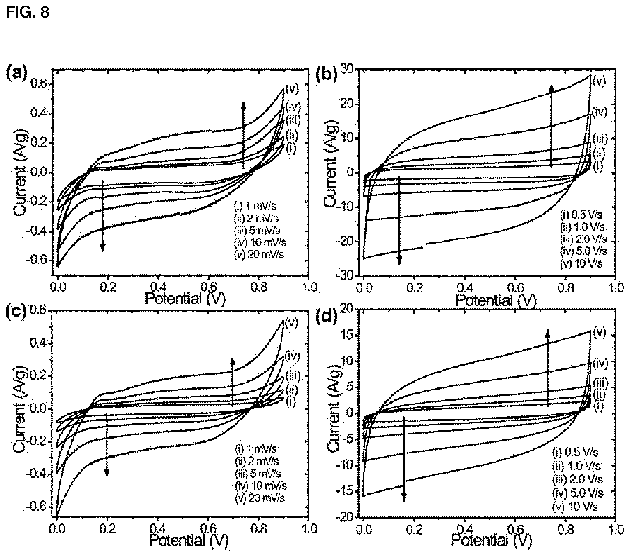

Similar results are observed even for high concentration electroactive nanofluids. **FIG. 8** shows cyclic voltammetry (CV) curves of **(a, b)** 0.1 wt % rGO electroactive nanofluid and **(c, d)** 0.4 wt % rGO electroactive nanofluid at different scanning rates starting from lowest scan rate 1 mV/s (0.001 V/s) to 10,000 mV/s (10 V/s). Impressively, rGO electroactive nanofluid-based flowing electrode showed a rectangular shaped CV, typical of capacitive behavior, at the very high scan rate of 10 V/s confirming excellent power density of rGO electroactive nanofluid-based electrochemical flow capacitor (EFC). It should be noted that the shape of CV curves becomes more and more rectangular with increase in scan rate. This indicates an increasingly important relative contribution of capacitive (Double Layer) energy storage vs. pseudocapacitive (faradaic) energy storage at high rates.

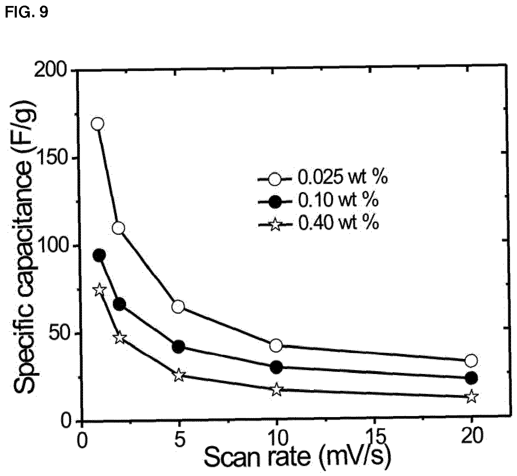

The behavior observed for electroactive nanofluids implies that the bulk of the liquid can be polarized, which in turn implies percolative electronic conduction through the electroactive nanofluid which could therefore be rightly considered as a true liquid electrode.
The values of specific capacitance of the cell for rGO electroactive nanofluids were calculated from the CV curves and are shown in **FIG. 9** for the different concentrations and scan rates tested.

As it could be expected, specific capacitances decrease gradually with increasing scan rate. A specific capacitance value of 169 F/g(rGO) was obtained for 0.025 wt% rGO electroactive nanofluid at a scan rate of 1 mV/s. Please note that in order to store that amount of charge on rGO within the flow cell, the rGO flakes must be electrically connected to the external load via a conductive pathway. Unlike conventional supercapacitors in which solid film electrodes benefit from well-defined fixed conduction paths, our cell utilizes a 'liquid electrode' in which charge must percolate through a dynamic network of conductive particles.

The values of specific capacitances represented in **FIG. 9** are very much comparable or even higher than the values reported for thicker carbon slurries.

For instance, Presser et al. [The electrochemical flow capacitor: A new concept for rapid energy storage and recovery. Adv. Energy Mater. 2, 895-902 (2012)] prepared a thick carbon slurry of carbide-derived carbon powder obtained from titanium carbide (TiC: CDC) and 1 M Na₂SO₄ with electroactive nanofluids of 3:1 and 4:1 (electrolyte: carbon by mass). The highest specific capacitance reported for toothpaste-like TiC:CDC slurry (3:1, electrolyte: carbon) was 109 F/g at the scan rate of 2 mV/s.

Furthermore, Zhang et al.[Zhang, C. et al. Highly porous carbon spheres for electrochemical capacitors and capacitive flowable suspension electrodes. Carbon, 77, 155-164 (2014)] reported a specific capacitance of 154 F/g at 2 mV/s in 1 M H₂SO₄ for a thick slurry of porous carbon spheres with concentration ranging from 16 wt % to 23 wt%.

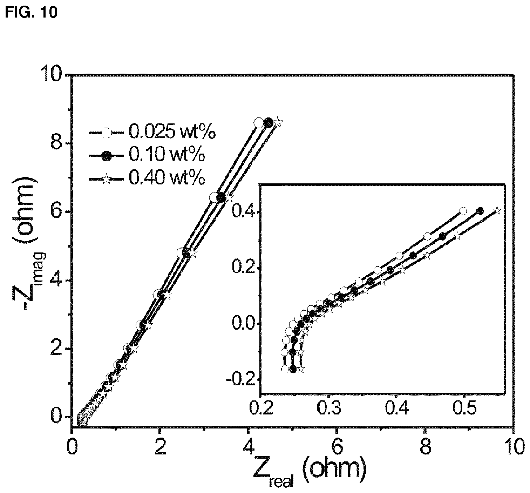

Finally, electrochemical impedance spectroscopy data show a low ohmic resistance in the range of about -0.23-0.28 Ω that suggests fast ion transport and a highly conductive network facilitating charge and ion percolation. See **FIG 10**. These values are even lower than those reported for spherical carbon particles suspension electrodes in
- Hatzell, K. B. et al. A high performance pseudocapacitive suspension electrode for the electrochemical flow capacitor. Electrochim. Acta, 111, 888-897 (2013).
- Hatzell, K. B. et al. Composite manganese oxide percolating networks as a suspension electrode for an asymmetric flow capacitor. ACS Appl. Mater. Interfaces, 6, 8886-8893 (2014).
- Hatzell, K. B. et al. Capacitive deionization concept based on suspension electrodes without ion exchange membranes. Electrochem. Commun. 43, 18-21 (2014).

In addition, the impedance curves show a distorted semi-circle in the high-frequency region due to the porosity of rGO and a vertically linear spike in the low-frequency region. The high-frequency intercept of the semi-circle on the real axis yields the solution (electrolyte) resistance (Rsol), and the diameter provides the charge-transfer resistance (Rct) over the interface between rGO electrode and electrolyte.

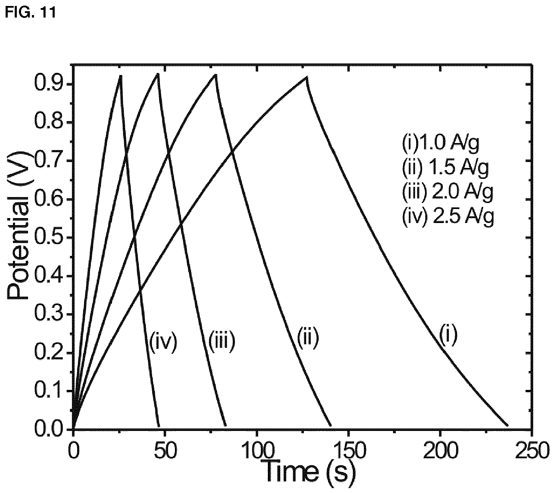

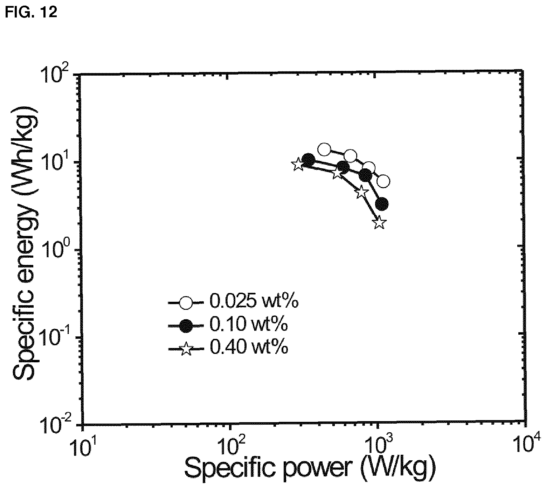

The electrochemical performance of rGO electroactive nanofluids of examples 2 was further studied by galvanostatic charge/discharge cycling in static conditions as shown in **FIG. 11**. The shapes of charge-discharge curves are symmetric, triangular and linear for the rGO electroactive nanofluids at all different current densities used. For the 0.025 wt% rGO electroactive nanofluid, specific capacitance were 117 and 50 F/g(rGO) at current densities of 1 A/g and 2.5 A/g, respectively. This corresponds to specific energy values of 5.7-13.1 Wh/kg(rGO) and specific power of 0.45-1.13 kW/kg(rGO) as shown in **FIG. 12**.

The values of specific energy are significantly higher than for previous reports on slurries, for example, 5.6-8.2 Wh/kg for carbon beads slurry [Campos, J. W. et al. Investigation of carbon materials for use as a flowable electrode in electrochemical flow capacitors. Electrochim. Acta 98, 123-130 (2013)].

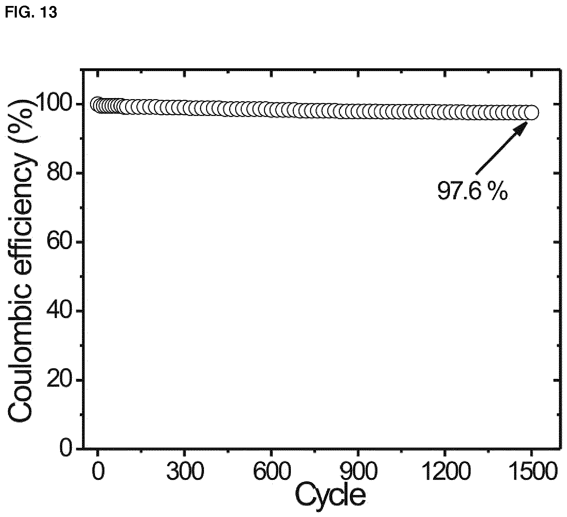

Moreover, the galvanostatic cycling performance was found to be stable, with cycle efficiencies greater than 97.6 % after 1500 charge/discharge cycles (**FIG. 13**).

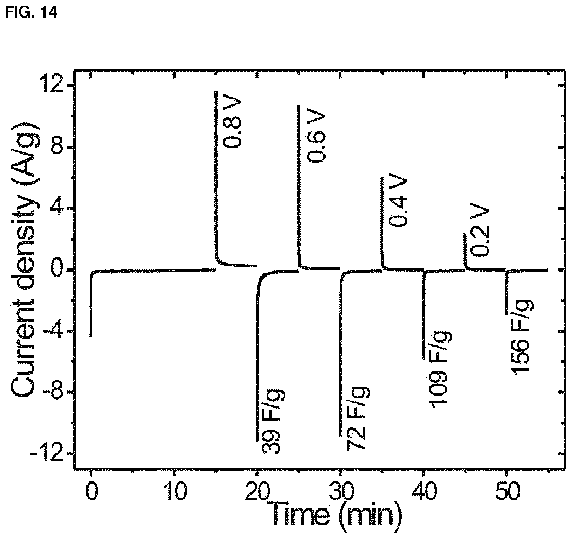

**FIG 14** shows a series of chronoamperometry experiments carried out for rGO electroactive nanofluids under static conditions. Initially, the cell was completely discharged for a period of 15 min and then charged to different potentials such as 0.2, 0.4, 0.6 and 0.8 V. The specific capacitances were calculated for rGO electroactive nanofluids at different potentials and are in the range 36-156 F/g(rGO), which are comparable to the values derived from CVs. The coulombic efficiency of the rGO electroactive nanofluid cell was found to be 98.2 % (**FIG. 14**), a large value since we did include the leakage current, which is in very good agreement with the coulombic efficiency derived from galvanostatic charge/discharge experiments (98.9 %).

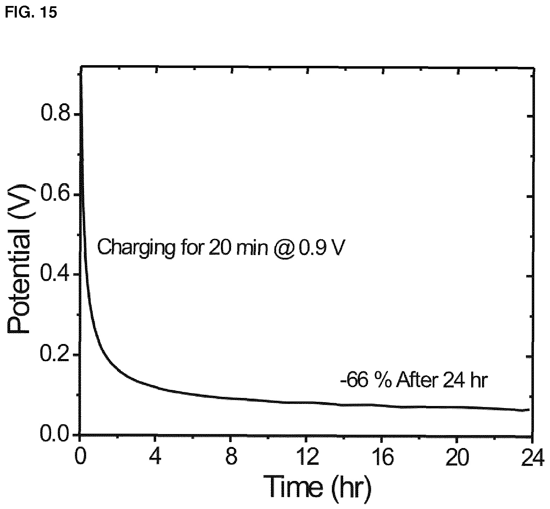

**FIG 15** shows the time-dependent loss of the open circuit cell potential (self-discharge) for rGO electroactive nanofluids. After 30 min of charging to maximum cell potential of 0.9 V, the open circuit voltage dropped to 34 % of the initial voltage (0.9 V) after 24 h.

This is still comparable or better than the optimized commercial solid-electrode packed supercapacitor cells [Kaus, M. Kowal, J. Sauer, D. U. Modelling the effects of charge redistribution during self-discharge of supercapacitors. Electrochim. Acta 55, 7516-7523 (2010)].

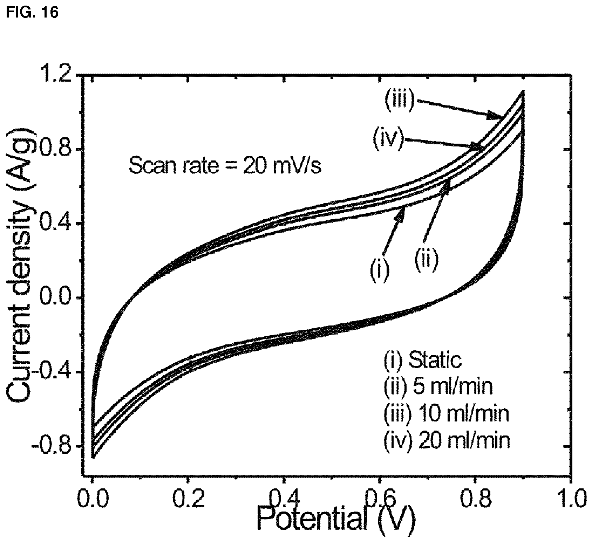

In order to get full insights on the potential of the electroactive nanofluids described in example 2 to be applied in flow cells, the electrochemical properties of rGO electroactive nanofluids under continuous flow conditions were also investigated. **FIG 16** shows CV curves (at 20 mV/s scan rate) of 0.025 wt% rGO electroactive nanofluid for different flow rates. It is interesting to note that the shape of the CV curves remains identical for the different flow rates used, which confirms the uniform and stable nature of the electroactive nanofluid. However, the current under the curve increases with increase in flow rate from 0 to 10 ml/min but then begins to decrease for flow rates > 10 ml/min.

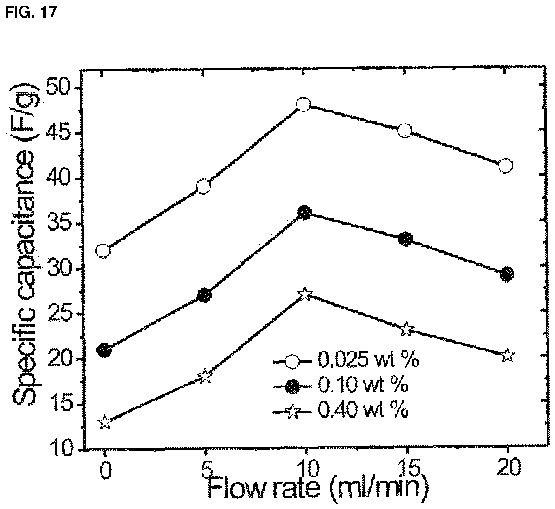

The variation of specific capacitance values with flow rate is presented in **FIG 17**. We can see how those values increase from 31 to 48 F/g(rGO) as flow rate is increased from 0 to 10 ml/min, but then decrease for higher flow rates. This initial increase in specific capacitance may be attributed to the flow of fresh rGO nanoparticles taking part in charge storage. However, at high flow rates, and under the experimental conditions used, the residence time for rGO nanoparticles in the flow channels will eventually be insufficient to allow for full charge of all the dispersed material, consequently leading to a decrease of the specific capacitance. It should be noted though that this "bypassing" effect could take place at much faster rates through an optimized design of the electrochemical cell, for instance with higher surface area current collectors.

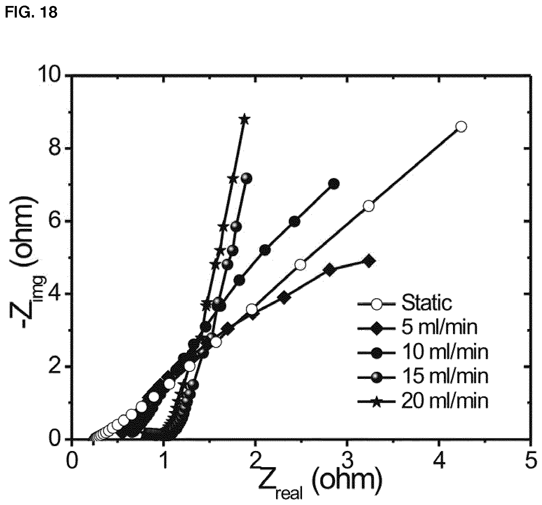

In addition to this, fast electroactive nanofluid flow rates can also lead to a detrimental increase in resistance (contact resistance, friction and particle-particle resistances). This is confirmed from potentiodynamic electrochemical impedance measurements (PEIS) shown in **FIG 18**. The interfacial resistance associated with the current collector and rGO electroactive nanofluid interface was found to constitute a large portion of the total cell resistance.

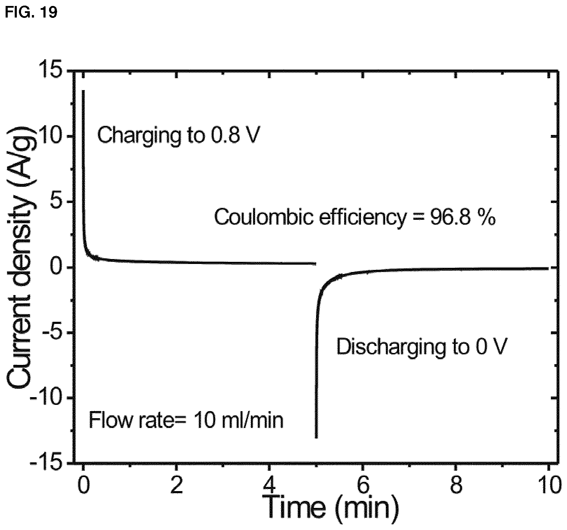

Furthermore, when compared to static charge-discharge experiments, there is a slight decrease in coulombic efficiency in cycling under flowing conditions (96.8 %) (**FIG 19**). This may also be attributed to the increase in interfacial resistance during flow condition. Nevertheless, these preliminary flow experiments confirmed that EFC cells based on rGO electroactive nanofluids work very promisingly during flow conditions.

### Example 5: Synthesis of Polyoxometalate (POM)-rGO electroactive nanofluids

Two different hybrid materials based on rGO and polyoxomelatates (POM) i) rGO-phosphotungstate (H3PW12O40) (in short, rGO-PW12) and ii) rGO-phosphomolybdate (H3PMo12O40) (in short, rGO-PMo12) have been prepared. Briefly, two samples, 0.25 g each of rGO was dispersed in 100 ml of deionized water in two separate beakers with probe sonicator (of power 1500 watt) for 2 hours. Later, 10 mM of each phosphotungstic acid (H3PW12O403H2O, (PW12)) and phosphomolybdic acid (H3PMo12O40.3H2O, (PMo12)) were added in the corresponding beakers of pre-sonicated rGO solutions. These suspensions were further sonicated for 5 hours and kept at room temperature for the next 24 hrs. Afterwards, these products were filtered-off separately and dried in vacuum oven at 80 °C overnight. The resulting products were labelled as rGO-PW12 and rGO-PMo12, for the synthesis from phosphotungstic and phosphomolybdic acids, respectively.

Hybrid Electroactive nanofluids of rGO-POMs were prepared by direct dispersion of rGO-PW12 and rGO-PMo12 solids in water. In particular, for application as flowing electrode the solids were dispersed in aqueous H₂SO₄ electrolyte. Thus, hybrid electroactive nanofluids were prepared by mixing 0.025 wt% of rGO-PW12 and rGO-PMo12 in 1 M H₂SO₄ aqueous solution, separately. In order to get stable suspension, 0.5 wt% of surfactant (triton X-100) was added and the mixture was kept in an ultrasonic bath up to 2 h.

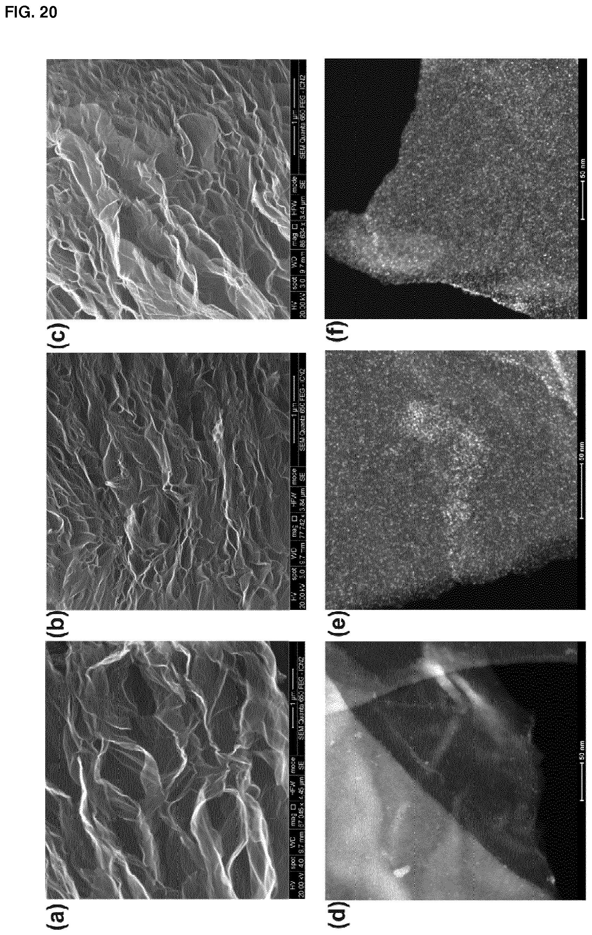

**FIG. 20** **(a, b and c)** shows SEM images of rGO, rGO-PMo12 and rGO-PW12 samples, respectively whereas **Fig. 20 d), e) and f)** show high resolution scanning TEM (STEM) images , showing the complete and homogeneous coverage of POMs clusters on rGO (**FIG. 20 e) and f)**) which are seen as minuscule (1nm size) bright specs on the graphene flakes.

### Example 6: Characterization of POM-rGO electroactive nanofluids electrodes

The electrochemical characterization of the POM-rGO electroactive nanofluids of example 5 was carried out both under static and continuous flow conditions using the flow cell described in Example 4.

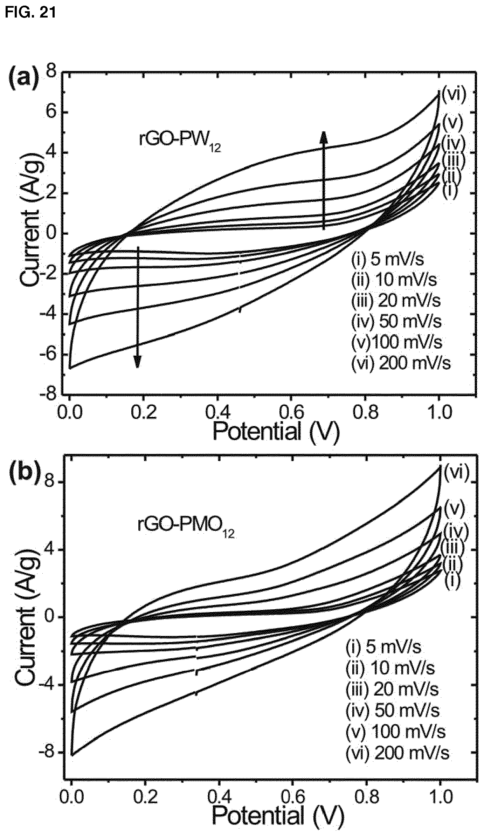

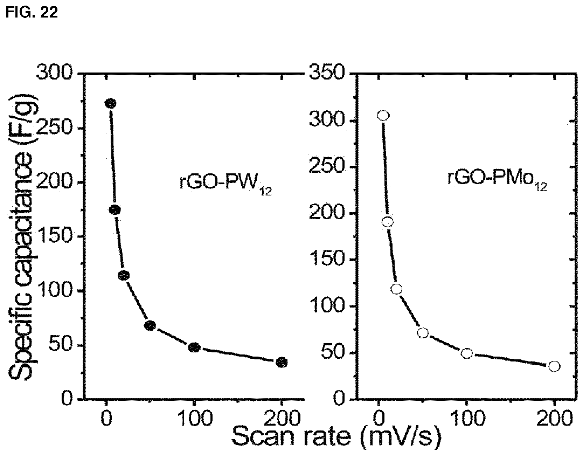

**FIG. 21** shows the CV curves of **a)** rGO-PW12 and **b)** rGO-PMo12 electroactive nanofluid (0.025 wt %) electrode at different scanning rates (from 5 mV/s to the highest scan rate of 200 mV/s). Impressively, the CV shapes are not ideal rectangular confirming the contribution from redox activities of POMs clusters. In addition, the shape of CV curves remains same even at the high scan rate of 200 mV/s; indicating that rGO-POM electroactive nanofluids possess excellent rate capabilities, as needed for high-power supercapacitors.
The values of specific capacitance of the cell for rGO-POMs (Example 5) electroactive nanofluids were calculated from the CV curves and are shown in **FIG. 22** for rGO-PW12 and rGO-PMo12 nanofluid of constant concentration (0.025 wt%) at different scanning rates.

The specific capacitances decrease gradually with increasing scan rate. Interestingly, the specific capacitance values of 273 F/g(rGO-PW12) and 305 F/g(rGO-PMo12) were obtained for 0.025 wt% rGO-POMs electroactive nanofluid at a scan rate of 5 mV/s. The values of specific capacitances represented in **FIG. 22** are very much comparable or even considerably higher than the values reported for carbon-POM composite solid electrodes in conventional supercapacitors.

For example, in our recent investigation by P. Gomez-Romero et al. [Hybrid energy storage: high voltage aqueous supercapacitors based on activated carbon-phosphotungstate hybrid materials, Mater. Chem. A, 2014, 2, 1014] reported a specific capacitance of 254 F/g for Activated carbon-PW12 solid composite electrodes whereas in our other report [Hybrid electrodes based on polyoxometalates-carbon for electrochemical supercapacitors] the value of specific capacitance obtained for Activated carbon-PMo12 solid electrode was 183 F/g.

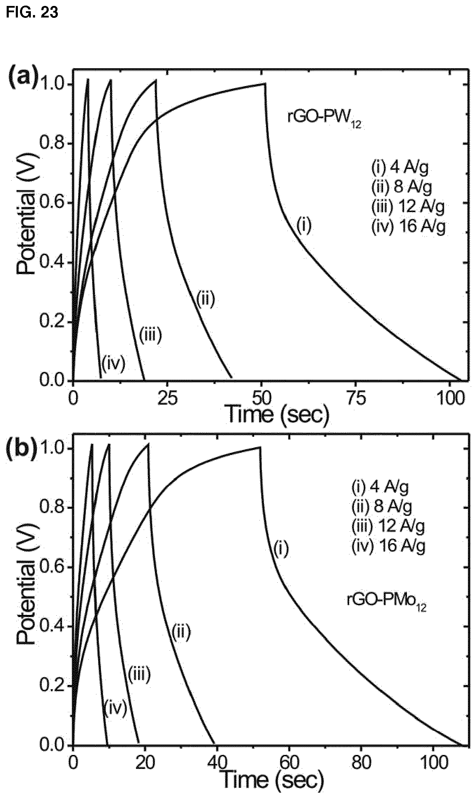

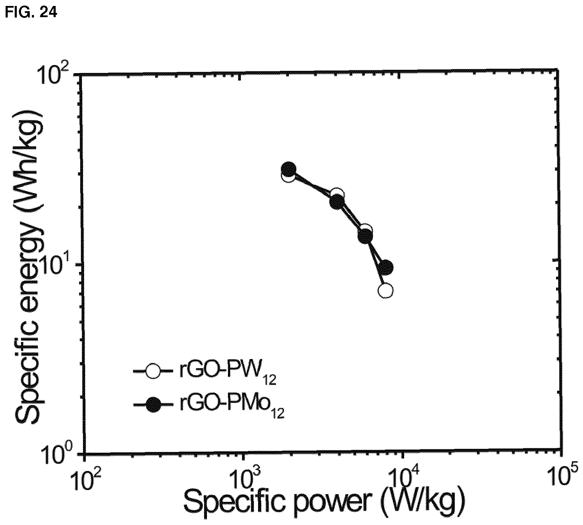

The electrochemical performance of rGO-POMs electroactive nanofluids described in example 5 was further studied by galvanostatic charge/discharge cycling in static conditions as shown in **FIG. 23 a)** **rGO-PW12 and b) rGO-PMo12.** The shapes of charge-discharge curves are not ideal triangular and linear for both the rGO-POM electroactive nanofluids at all different current densities used. For the 0.025 wt% rGO-POM electroactive nanofluid, specific energy values obtained are in the range of 7-28.8 Wh/kg(rGO-PW12) and 9.3-30.9 Wh/kg(rGO-PMo12) whereas the specific power for both electroactive nanofluids is 2-8 kW/kg(rGO-POM) as shown in **FIG. 24****.**

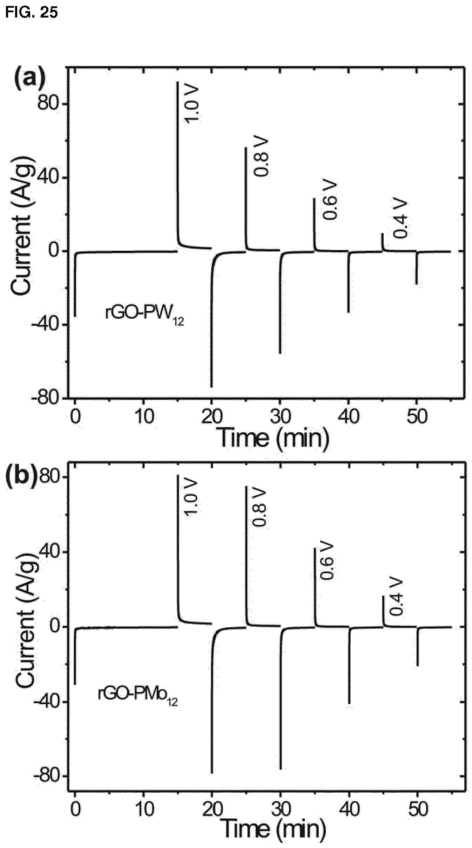

**FIG 25** shows a series of chronoamperometry experiments carried out for **a) rGO-PW12 and b) rGO-PMo12** electroactive nanofluids under static conditions. Initially, the cell was completely discharged for a period of 15 min and then charged to different potentials such as 0.4, 0.6, 0.8 and 1.0 V. The specific capacitances were calculated for both rGO-POM electroactive nanofluids at different potentials and are in the range 124-242 F/g(rGO-PW12 and 143-293 F/g(rGO-PMo12), which are comparable to the values derived from CVs. The coulombic efficiency of the rGO electroactive nanofluid cell was found to be between 98.3-98.7 % (**FIG. 25**), a large value since we did include the leakage current.

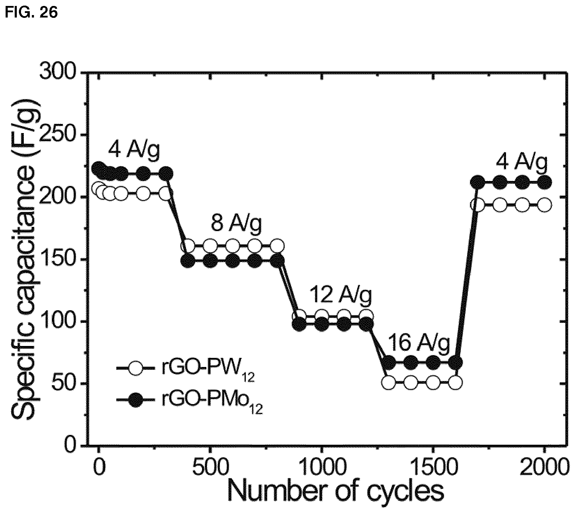

The cycle life is very important parameter in the supercapacitors. **FIG 26** shows the cycle stability of rGO-POM electroactive which was investigated by galvanostatic charge/discharge test at different current densities from 4 A/g to 16 A/g for 200 cycles. It is interesting to note that both the rGO-POM based liquid electrodes exhibits stability in the range of 92-94 % after 2000 cycles.

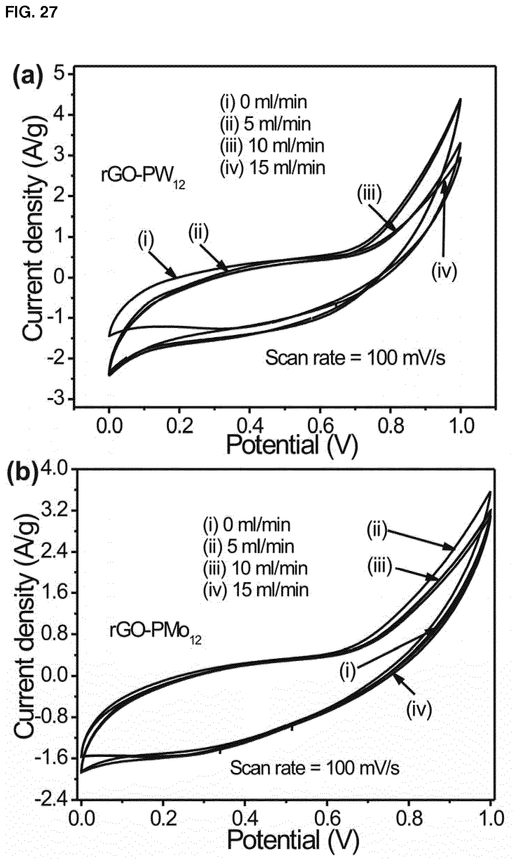

Further, the electroactive nanofluids described in example 5 to be applied in flow cells, in order to investigate the electrochemical properties of rGO-POM electroactive nanofluids under continuous flow conditions. **FIG 27 a)** **rGO-PW12, b) rGO-PMo12** shows CV curves (at 100 mV/s scan rate) of 0.025 wt% rGO-POM electroactive nanofluid for different flow rates. It is interesting to note that the shape of the CV curves remains identical for the different flow rates used, which confirms the uniform and stable nature of the rGO-POM electroactive nanofluid. However, the current under the curve increases slightly with increase in flow rate from 0 to 10 ml/min but then begins to slight decrease for flow rates > 10 ml/min.

This slight variation in current density may be attributed to the flow of fresh rGO-POM nanoparticles taking part in charge storage. However, at high flow rates, and under the experimental conditions used, the residence time for rGO-POM nanoparticles in the flow channels will eventually be insufficient to allow for full charge of all the dispersed material, consequently leading to a decrease of the specific capacitance. In addition to this, during the high flow rate the redox species in rGO-POM (example 5), could not get time for complete oxidation and reduction which consequently reduces the current under curves.

## Claims

1. A electroactive nanofluid **characterized in that** it comprises
a) a liquid medium selected from an organic solvent or a water solution of acidic, neutral or basic compounds and said liquid medium optionally comprising a surfactant,
and b) a graphene-based compound or composite, homogenously dispersed in the liquid medium, and said graphene-based compound or composite optionally comprising an electroactive substance associated to the graphene based compound or composite.

2. The electroactive nanofluid according to the preceded claim, wherein the liquid medium is an organic solvent selected from the list consisting of acetonitrile, dimethylformamide and dimethylacetamide.

3. The electroactive nanofluid according to the preceded claim, wherein the surfactant is in a weight percent between 0.01 % and 5 % based on the total weight of the liquid medium.

4. The electroactive nanofluid according to any of claims 1 to 3, wherein the graphene based compound is in a weight percent between 0.01 % and 10 % based on the total weight of the electroactive nanofluid.

5. The electroactive nanofluid according to the preceded claim, wherein the graphene based compound is in a weight percent between 0.025 % and 0.4 % based in the total weight of the electroactive nanofluid.

6. The electroactive nanofluid according to any of claims 1 to 5, wherein the graphene-based compound further comprising polyoxometalates clusters as electroactive material.

7. The electroactive nanofluid according to the preceded claim wherein the poluoxometalates clusters are in a weight percent between 0.01 % and 10 % based on the total weight of the electroactive nanofluid.

8. The electroactive nanofluid according to any of claims 6 or 7, wherein the polyoxometalates clusters are selected from the list consisting of phosphotungstate and phosphomolybdate.

9. The electroactive nanofluid according to any of claims 1 to 8, comprising activated carbons or carbon nanotubes.

10. Use of the electroactive nanofluid according to any of claims 1 to 9 as electrode of a flow electrochemical cell.
